# EUROPEAN PATENT SPECIFICATION

(11) **EP 0 410 579 B1**
(45) Date of publication and mention of the grant of the patent: **26.04.1995**
(21) Application number: 90306898.9
(22) Date of filing: 25.06.1990
(51) Int. Cl.: G11B 27/10

(54) **Image searching apparatus**
Bildsuchgerät
Appareil de recherche d'image

(30) Priority: 25.07.1989 JP 191877/89
(43) Date of publication of application: 30.01.1991
(73) Proprietor: SONY CORPORATION, Tokyo 141 (JP)
(72) Inventor: Kawai, Toshihiko, c/o Patent Division, Sony Corp., Shinagawa-ku Tokyo 141 (JP); Ohmori, Keisuke, c/o Patent Division, Sony Corp., Shinagawa-ku Tokyo 141 (JP); Tanabe, Mitsuru, c/o Patent Division, Sony Corp., Shinagawa-ku Tokyo 141 (JP)
(74) Representative: Cotter, Ivan John

(56) References cited:
- EP-A- 0 282 997
- DE-A- 3 401 678
- US-A- 4 802 019
- PATENT ABSTRACTS OF JAPAN vol. 11, no. 253 (P-606)18 August 1987 &JP-A-62 058 374 (HITACHI MEDICAL CORP) 14 March 1987
- PATENT ABSTRACTS OF JAPAN vol. 12, no. 93 (P-680)26 March 1988 & JP-A-62 226 375 (RICOH LTD) 5 October 1987

## Description

This invention relates to image searching apparatus.

In a video image reproducing system such as a laser disc player, a professional video tape recorder (VTR) or the like, it is known to add an index number (address signal) to one picture (one frame) of a reproduced video signal, whereby the index number is inputted to the reproducing system to search or access the corresponding picture (see Japanese Patent Application Publication No. JP-A-61-99189).

Generally, the index number must be inputted to the above-described video image reproducing system by operating a keyboard. However, the substantial disadvantage then arises that the user must remember a picture that he wishes to see and the index number thereof because the picture and index number bear no apparent relationship to each other.

A system has also been proposed in which a bar code of a picture and a bar code of an index number are printed in advance so as to save much time and cumbersome work in operating the keyboard. This proposal not only gives rise to a need for the printed bar code and other related objects, but also results in the disadvantage that the picture that the user wishes to see cannot be coded as an index number.

European Patent Application Publication No. EP-A-0 282 997 (on which the pre-characterising part of claim 1 hereof is based) discloses an apparatus for storing both image data and so-called code data, e.g. text data generated by a word processor. The image data is stored on an optical disc. When image data is to be stored, a document bearing an image is placed in a scanner which reads the image data from the document and supplies the data to a cathode ray tube (CRT) display unit. The image data is displayed on a screen of the CRT display unit. The screen of the CRT display unit simultaneously displays other information, namely the wording "IMAGE DATA". To signify to the apparatus that the data to be stored is image data, the operator uses a keyboard or mouse as pointing means to move a cursor to below the wording "IMAGE DATA", that is to indicate the area containing such wording.

According to the invention there is provided an image searching apparatus comprising:
a still image memory for storing still image data;
display control means for displaying, simultaneously within one display area, a still image and other information; and
pointing means for indicating a desired area on said display area;
the apparatus being characterised by:
selecting means for selecting a still image of one picture unit of a moving image signal constituted by image data outputted from a motion image memory;
an index memory for storing said image data corresponding to said still image selected by said selecting means and index data corresponding to said still image;
said display control means being operative to display, simultaneously within said one display area, a moving image represented by a motion video signal from said motion image memory and a still image represented by a still video signal from said still image memory; and
control means for reading out said index data corresponding to a still image indicated by said pointing means on said display area and for reading out said image data corresponding to said still image indicated by said pointing means.

A preferred image searching apparatus embodying the invention and described hereinbelow can eliminate or at least alleviate the aforenoted shortcomings and disadvantages. Thus, the user can positively search for a target picture with ease. Also, the user need not remember a target (desired) picture and an index number thereof. Further, unlike the bar code system, a printed mark and so on is not needed. Additionally, only a picture that the user wishes to see can be formed as an index code. Yet further, the preferred image searching apparatus is such that substantial protection against mis-operation by the user can be provided.

The invention will now be further described, by way of illustrative and non-limiting example, with reference to the accompanying drawings, in which:
Figure 1 is a circuit block diagram of an image searching apparatus according to a preferred embodiment of the invention;
Figure 2 (formed by Figures 2A and 2B which are presented on respective sheets to permit the use of a suitably large scale) is a flow chart illustrating the operation of the apparatus;
Figure 3 is a schematic representation of a data table stored in a hard disc device of the apparatus; and
Figure 4 is a front view of an example of a picture displayed on a display means of the apparatus.

An image searching apparatus embodying the invention will now be described with reference to the drawings. In this embodiment, a laser disc player is used as a video image reproducing system and the operation thereof is mainly controlled by using a mouse.

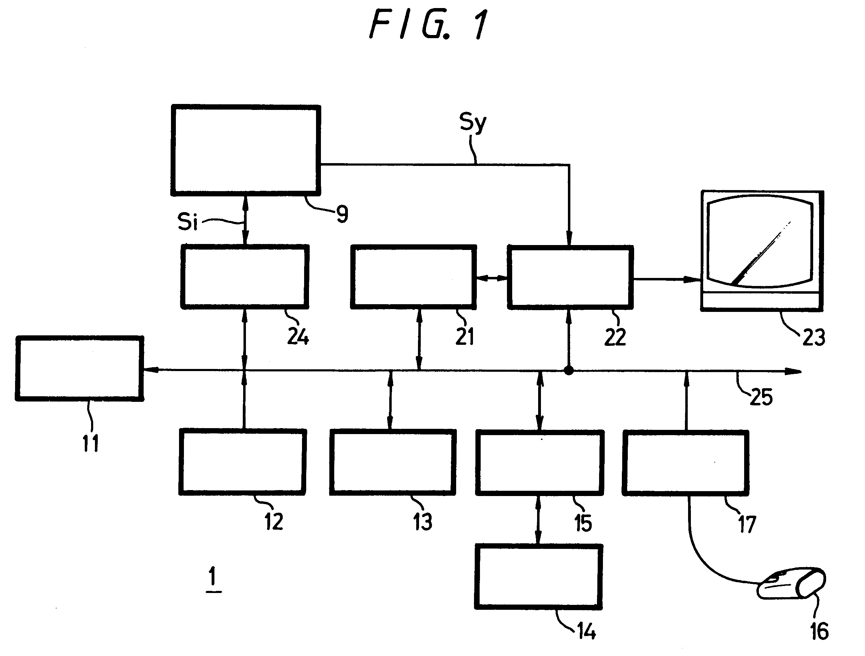

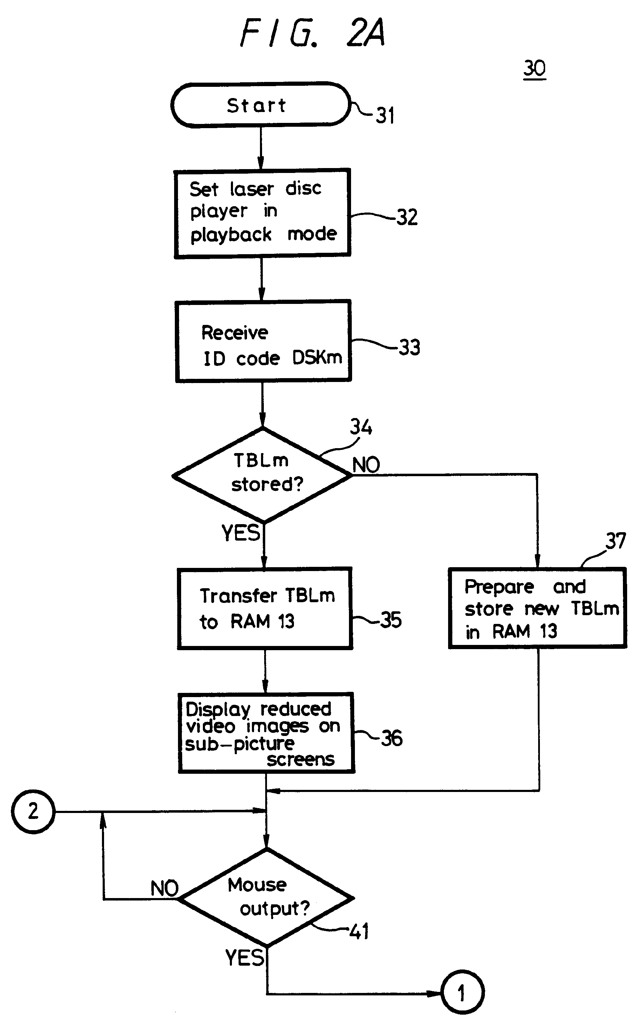

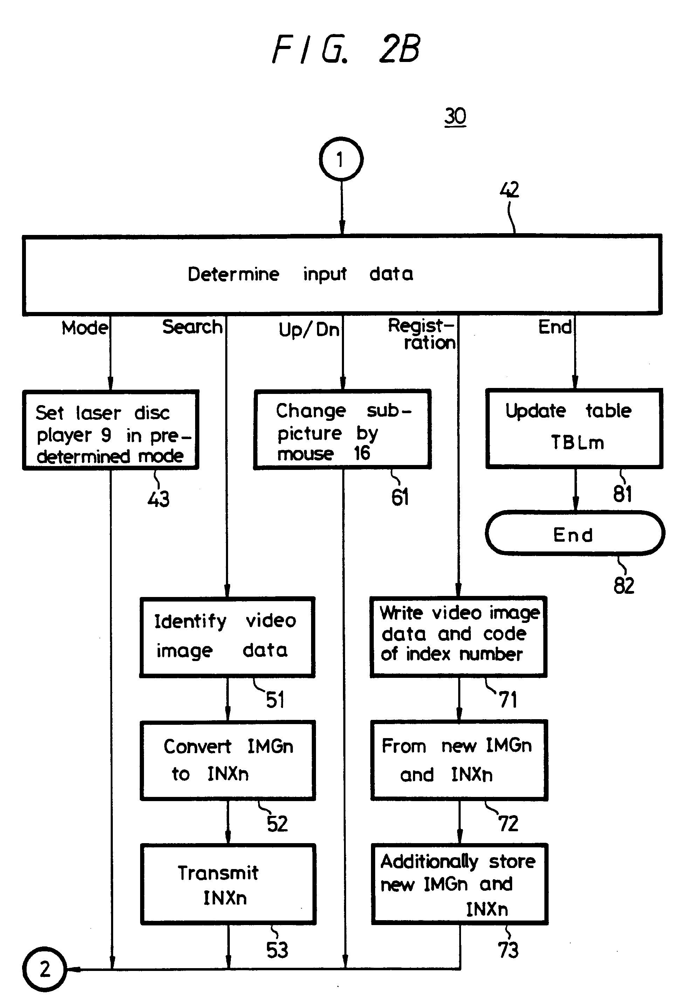

Figure 1 shows an image searching apparatus 1. The image searching apparatus 1 comprises a central processing unit (CPU) 11, a read only memory (ROM) 12 in which various programs are written, and a random access memory (RAM) 13 acting as a working area. The ROM 12 also has stored therein a routine 30 (for execution by the CPU 11) of a flow chart shown in, for example, Figure 2 (formed by Figures 2A and 2B).

The image searching apparatus further comprises a hard disc device or apparatus 14 which is connected to a bus line 25 via a hard disc interface 15. A mouse 16 is connected to the bus line 25 via a mouse interface 17.

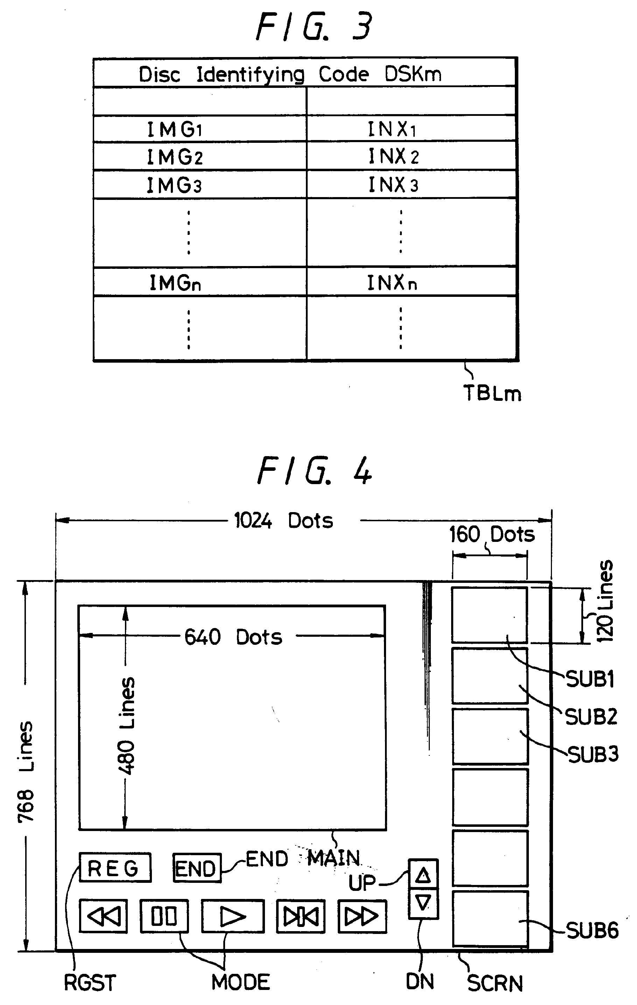

The hard disc device 14 has stored therein a data table TBLm for each laser disc (not shown) that the user wishes to search. Figure 3 schematically illustrates one of the data tables TBLm, m being a desired number from 1 to an upper limit value determined by the capacity of the hard disc device 14 and m also corresponding to an m'th laser disc. More specifically, as shown in Figure 3, the table TBLm includes a disc identifying code DSKm and a table indicating correspondence between items of video image data IMGn and index codes INXn, wherein n is an integer greater than 1.

The disc identifying code DSKm indicates that the table TBLm is for the m'th laser disc. The video image data IMGn is data that results from reducing the size of a picture (search key), which the user wishes to search for in a searching operation, to form a picture of, for example, 160 dots (in the horizontal direction) and 120 lines (in the vertical direction). Each index code INXn indicates an index number that is assigned to the original picture of the laser disc designated by the corresponding item of video image data IMGn. Pairs of items of video image data IMGn and index codes INXn corresponding to the number of pictures to be searched for are stored in the hard disc device 14 as a table TBLm for every laser disc, the aforenoted number being the upper limit value of n.

Each item of video image data IMGn is compressed to about 50 kilobytes such as by a data compressing method so that, if the capacity of the hard disc device 14 is selected to be 100 megabytes, the device 14 can store video image data IMGn for 2000 laser disc pictures.

Turning back to Figure 1, the image searching apparatus includes a so-called video RAM (V-RAM) 21 that is used to display a picture, a cathode ray tube (CRT) controller 22 that controls the operation of a CRT display 23, and a communication circuit 24 constructed in accordance with, for example, the RS-232C standard.

Figure 4 shows an example of a picture screen (displayed video image) SCRN displayed on the CRT display 23. The display screen SCRN is capable of displaying a picture of, for example, 1020 dots (in the horizontal direction ) x 768 lines (in the vertical direction). In the display screen SCRN, an area of 640 dots (in the horizontal direction) x 480 lines (in the vertical direction) serves as a main picture screen window MAIN and, of the remainder, six areas, each of 160 dots (in the horizontal direction) x 120 lines (in the vertical direction), serve as sub-picture screen windows SUB1 to SUB6. The original picture (i.e. the original picture of a laser disc) is displayed on the window MAIN and the reduced picture, provided by the video image data IMGn, is displayed on the windows SUB1 to SUB6. Further, the picture screen SCRN displays thereon icons RGST, UP, DN, END used to process the picture and icons MODE used to operate a laser disc player 9 (Figure 1) as will be described below.

Referring back to Figure 1, the laser disc player 9 is controlled to operate in a desired mode in response to a control signal from the communication circuit 24. The laser disc player 9 is also arranged so as to supply the communication circuit 24 with various data signals such as the identifying code DSKm.

Further, the laser disc player 9 can reproduce a video signal Sy of a picture having a corresponding index number in response to receipt of an index signal (address signal) Si from the communication circuit 24. The video signal Sy reproduced by the laser disc player 9 is supplied through the CRT controller 22 to the CRT display 23.

Registration of and searching for video images (pictures) is carried out as follows when the CPU 11 executes the routine 30.

If the user designates a playback icon from the icons MODE on the picture screen SCRN by clicking on the icon by means of the mouse 16, the processing of the CPU 11 beings at a start step 31 of the routine as shown in Figure 2A. (Clicking on an icon means moving a cursor onto the icon by means of the mouse 16 and then clicking (pressing) a button (key) of the mouse). The routine then goes to a step 32, wherein the control signal from the communication circuit 24 is supplied to the laser disc player 9 so that the laser disc player 9 is set in the playback mode to start playing back a laser disc. The video signal Sy reproduced from the laser disc is supplied from the laser disc player 9 through the CRT controller 22 to the CRT display 23. The reproduced video signal Sy is written in and/or read out from the video RAM 21, and the video signal Sy is displayed on the main picture screen window MAIN of the picture screen SCRN of the CRT display 23 as a standard video image. In this way, the reproduced picture (i.e. a real moving picture in most cases) provided by the laser disc player 9 is continuously displayed on the window MAIN until a particular operation is carried out.

At that time, the disc identifying code DSKm is reproduced from the disc from which the reproduction has just started, and the code DSKm is supplied through the laser disc player 9 to the communication circuit 24. The code DSKm is received and identified at a step 33, and the processing carried out by the CPU 11 proceeds to the decision step 34, in which it is determined whether or not the table TBLm corresponding to the disc identifying code DSKm is stored in the hard disc device 14.

If the table TBLm is stored in the hard disc device 14, as represented by a YES at the step 34, the routine then proceeds from the step 34 to a step 35. In the step 35, the corresponding table TBLm is transferred from the hard disc device 14 through the interface 15 to the RAM 13, and the routine proceeds to a step 36. At the step 36, of the items of video image data IMGn of the table TBLm in the RAM 13, the first six data items IMG1 to IMG6 are generated and transferred to the video RAM 21, whereby reduced size video images based on the data IMG1 to IMG6 are displayed in the windows SUB1 to SUB6, respectively. Then, the processing moves to a decision step 41.

If the table TBLm corresponding to the identifying code DSKm is not stored in the hard disc device 14, as represented by a NO at the step 34, the routine proceeds from the step 34 to a step 37, in which a new table TBLm is prepared in the RAM 13. Then, the routine proceeds to the next decision step 41. In that case, the processing at the step 36 is not carried out so that nothing is displayed in the windows SUB1 to SUB6.

In the step 41, it is determined whether or not the mouse 16 has generated an output. If a NO is outputted at the step 41, the routine then returns to the step 41 until the mouse 16 generates its output.

If the mouse 16 generates an output, as represented by a YES at the step 41, the routine proceeds from the step 41 to a step 42 shown in Figure 2B. In the step 42, it is determined on which one of the icons RGST, UP, DN, END, MODE of the screen SCRN and the sub-picture screen windows SUB1 to SUB6 the mouse 16 has been clicked. If the mouse 16 was clicked on an icon MODE, the processing carried out by the CPU 11 proceeds from the step 42 to a step 43, in which the control signal is supplied through the communication circuit 24 to the laser disc player 9, whereby the laser disc player 9 is placed in an operational mode corresponding to the icon MODE on which the mouse 16 was clicked. For example, the laser disc player 9 can be set in a frame picture mode, a pause mode, a fast forward mode or the like. Then, the processing carried out by the CPU 11 returns to the step 41.

Accordingly, if the mouse 16 is clicked on an icon MODE, the laser disc player 9 can be set in the desired mode so that a target (desired) reproduced picture can be displayed on the window MAIN of the picture screen SCRN.

If it is determined in the step 42 that the mouse 16 has been clicked on one of the windows SUB1 to SUB6 at the step 41, the routine proceeds from the step 42 to a step 51. At the step 51, the item of video image data IMGn in the window clicked on by the mouse 16 is identified, and the routine proceeds to a step 52, in which the identified video image data IMGn is converted into an index code INXn according to the table TBLm.

Next, in a step 53, the converted index code INXn is supplied through the communication circuit 24 to the laser disc player 9 with the result that the laser disc player 9 searches for the picture having the index number indicated by the index code INXn on the basis of the index code INXn thus supplied thereto. If the corresponding picture is found, the laser disc player 9 is placed in a reproduction mode from the searched picture.

Accordingly, if one of the reduced pictures displayed on the windows SUB1 to SUB6 is selected by using the mouse 16, a picture search is carried out on the laser disc using the reduced picture as a search key. If the picture that the user wishes to see is found, the reproduced signal Sy of the laser disc is displayed on the main picture screen window MAIN as a video image from the corresponding picture.

The processing of the CPU 11 returns from the step 53 to the step 41, at which the CPU 11 awaits the next command that the user issues by using the mouse 16.

Further, if it is determined in the step 42 that the mouse 16 has been clicked on the icon UP or DN in the step 41, the processing carried out by the CPU 11 proceeds from the step 42 to a step 61. In the step 61, if the mouse 16 has been clicked on the icon UP, the RAM 13 derives the next six items of video image data IMG7 to IMG12 succeeding the items of video image data IMG1 to IMG6. The video image data items IMG7 to IMG12 are transferred to the video RAM 21, whereby reduced video images based on the data items IMG7 to IMG12 are displayed in the windows SUB1 to SUB6, respectively. In this way, in response to clicking on the icons UP or DN by the mouse 16, items of video image data succeeding the video image data of reduced pictures currently displayed on the windows SUB1 to SUB6 are provided by the RAM 13 on a 6 by 6 (or, if the number of items of data is less than 6, by that number each) basis and transferred to the video RAM 21, whereby reduced pictures succeeding the reduced pictures currently displayed on the windows SUB1 to SUB6 are displayed on the windows SUB1 to SUB6, respectively. Then, the routine returns to the step 41.

Accordingly, each time the icon UP or DN is designated by the mouse 16, the reduced pictures displayed on the windows SUB1 to SUB6 as search keys are sequentially updated in response to the video image data IMGn of the table TBLm.

In that case, if the reduced pictures displayed on the windows SUB1 to SUB6 are selected by the mouse 16, a picture search is carried out on the laser disc, whereby the picture corresponding to the reduced size picture designated by the mouse 16 is displayed on the main picture screen window MAIN.

If it is determined at the step 42 that the mouse 16 has been clicked on the icon RGST in the step 41, the routine proceeds from the step 42 to a step 71. In the step 71, video image data for one picture of the reproduced signal Sy at that time and the code of the index number of the corresponding picture are written in the RAMs 21 and 13. Then, in a step 72, new video image data IMGn for a reduced size picture is formed from the video image data written for the one picture.

Next, in a step 73, the new video image data IMGn and the index code INXn indicating the index number written at step 71 are stored in the table TBLm of the RAM 13. Thereafter, the processing carried out by the CPU 11 returns to the step 41.

Therefore, each time the icon RGST is designated by the mouse 16, an item of video image data IMGn, which results from reducing the picture displayed on the main picture screen window MAIN at that time, and an index code INXn indicating the corresponding picture, are additionally registered in the table TBLm.

If it is determined at the step 42 that the icon END has been clicked on by the mouse 16 in the step 41, the processing carried out by the CPU 11 proceeds from the step 42 to a step 81, at which the table TBLm stored in the RAM 13 is supplied to the hard disc device 14, resulting in the table TBLm within the device 14 being updated. The routine 30 then ends at a step 82.

As set out above, a table TBLm in which video image data IMGn of a reduced size picture and an index code INXn are stored is prepared for each laser disc so that, when a target picture is searched for, if the reduced picture is designated as the search key the reduced picture is converted into the index code INXn and the target picture is searched for using the code INXn. Therefore, the target picture can be searched for with ease and it is not necessary for the user to remember the target picture and the index number thereof.

Printed elements are not needed, unlike the case of the above-mentioned previously proposed bar code system, and, in addition, only the picture that the user wishes to search for can be formed as the index.

Further, since the reduced pictures displayed on the windows SUB1 to SUB6 are selected and other operations are not required, mis-operation can be substantially avoided. Also, since a number of items of video image data IMGn much greater than the number of the windows SUB1 to SUB6 is supported, the number of reduced pictures which form search keys is not limited.

The operation of the laser disc player 9 corresponding to the processing at the step 43 may be carried out by operation keys provided on a body of the player or by a remote controller. When video image data IMGn is to be deleted, the corresponding video image data IMGn and the index code INXn thereof may be deleted from the table TBLm by clicking on the reduced pictures displayed on the windows SUB1 to SUB6 in similar manner to the search mode.

Furthermore, by clicking on the windows SUB1 to SUB6 by means of the mouse 16, the location of the reduced picture (i.e. sequential order of the reduced pictures) may be designated when the reduced search pictures are registered in the table TBLm.

In addition, the hard disc device 14 and/or the mouse 16 may be replaced by or supplemented by a magneto-optical disc device and/or a keyboard.

## Claims

1. An image searching apparatus comprising:
a still image memory (14) for storing still image data;
display control means (22, 23) for displaying, simultaneously within one display area (SCRN), a still image and other information; and
pointing means (16) for indicating a desired area on said display area (SCRN);
the apparatus being characterised by:
selecting means (11, 16) for selecting a still image of reduced size of one picture unit of a moving image signal constituted by image data outputted from a motion image memory (9);
an index memory (13) for storing said image data corresponding to said still image selected by said selecting means (11, 16) and index data corresponding to said still image;
said display control means (22, 23) being operative to display, simultaneously within said one display area (SCRN), a moving image represented by a motion video signal from said motion image memory (9) and a still image represented by a still video signal from said still image memory (14); and
control means (11) for reading out said index data corresponding to a still image indicated by said pointing means (16) on said display area (SCRN) and for reading out said image data corresponding to said still image indicated by said pointing means (16).

2. Apparatus according to claim 1, wherein the display control means (22, 23) is operative to display said motion image in a main window (MAIN) within said display area (SCRN) and to display said still image in a sub-picture window within said display area (SCRN).

3. Apparatus according to claim 2, wherein said control means (11) has a registration mode which can be selected by indicating a registration icon (RGST) by said pointing means (16) so that, when said registration icon is indicated by said pointing means, the still image of said one picture unit from said moving image signal displayed on said main window (MAIN) at the moment of indication by said pointing means (16) and index data corresponding to said still image are stored in said index memory (13).

4. Apparatus according to claim 2 or claim 3, wherein said control means (11) has a search mode which can be selected by indicating said still image in said sub-picture window by said pointing means (16) so that, when said sub-picture window is indicated by said pointing means (16), said control means (11) detects said still image indicated by said pointing means and transmits index data corresponding to said still image to said motion image memory (9).

5. Apparatus according to claim 2, claim 3 or claim 4, wherein said display area (SCRN) has a plurality of said sub-picture windows (SUB1 - SUB6).

6. Apparatus according to any one of the preceding claims, wherein said motion image memory (9) is a memory medium external to and connected to the remainder of the apparatus.

7. Apparatus according to any one of the preceding claims, wherein said pointing means (16) is operative to move a cursor on said display area (SCRN) to indicate said desired area.

8. Apparatus according to any one of the preceding claims, which is operative to display on said display area (SCRN) an icon (MODE) for controlling said motion image memory (9).

9. Apparatus according to any one of the preceding claims, wherein said image data and said index data are stored in said index memory (13) as an index table (TBLm).

## Patentansprüche

1. Bildsuchgerät, das folgendes aufweist:
einen Standbildspeicher (14) zur Speicherung von Standbilddaten;
Anzeigesteuermittel (22, 23) zur gleichzeitigen Anzeige eines Standbildes und anderer Informationen innerhalb eines Anzeigefeldes (SCRN); und
Zeigermittel (16) zur Anzeige eines gewünschten Bereiches auf dem Anzeigefeld (SCRN);
**gekennzeichnet durch**:
Auswahlmittel (11,16) zur Auswahl eines Standbildes von reduzierter Größe von einer Bildeinheit eines Laufbildsignales, das durch von einem Laufbildspeicher (9) ausgegebene Bilddaten dargestellt wird;
einen Indexspeicher (13) zur Speicherung der Bilddaten, die dem durch die Auswahlmittel (11,16) ausgewählten Standbild entsprechen, und Indexdaten, die dem Standbild entsprechen;
wobei die Anzeigesteuermittel (22,23) zur gleichzeitigen Anzeige innerhalb des einen Anzeigebereiches (SCRN) eines Bewegungsbildes, das durch ein Bewegungsvideosignal von dem Laufbildspeicher (9) dargestellt wird, und eines Standbildes, das durch ein Standvideosignal von dem Standbildspeicher (14) dargestellt wird, funktionsbereit sind; und
Steuermittel (11) zum Auslesen der Indexdaten, die einem Standbild entsprechen, das durch die Zeigermittel (16) auf dem Anzeigefeld (SCRN) angezeigt wird, und zum Auslesen der Bilddaten, die dem durch die Zeigermittel (16) angezeigten Standbild entsprechen.

2. Gerät nach Anspruch 1, worin das Anzeigesteuermittel (22,23) funktionsfähig ist für die Anzeige des Bewegungsbildes in einem Hauptfenster (MAIN) innerhalb des Anzeigefeldes (SCRN) und zur Anzeige des Standbildes in einem Teilbildfenster innerhalb des Anzeigefeldes (SCRN).

3. Gerät nach Anspruch 2, worin das Steuermittel (11) einen Registrierungsmodus aufweist, der durch Anzeige eines Registrierungs-Bildsymboles (RGST) durch das Zeigermittel (16), ausgewählt werden kann, sodaß, wenn das Registrierungs Bildsymbol durch das Zeigermittel angezeigt wird, das Standbild der einen Bildeinheit des Laufbildsignales, das in dem Hauptfenster (MAIN) in dem Augenblick der Anzeige durch das Zeigermittel (16) angezeigt wird, und Indexdaten, die dem Standbild entsprechen, in dem Indexspeicher (13) gespeichert werden.

4. Gerät nach Anspruch 2 oder 3, worin das Steuermittel (11) einen Suchmodus aufweist, der ausgewählt werden kann durch Anzeige des Standbildes in dem Teilbildfenster durch das Zeigermittel (16), sodaß, wenn das Teilbildfenster durch das Zeigermittel (16) angezeigt wird, das Steuermittel (11) das durch das Zeigermittel angezeigte Standbild detektiert und dem Standbild entsprechende Indexdaten an den Laufbildspeicher (9) überträgt.

5. Gerät nach Anspruch 2, 3 oder 4, worin das Anzeigefeld (SCRN), eine Vielzahl von Teilbildfenstern (SUB1-SUB6) aufweist.

6. Gerät nach einem der vorhergehenden Ansprüche, worin der Laufbildspeicher (9) ein externes Speichermedium ist und mit dem Rest des Gerätes verbunden ist.

7. Gerät nach einem der vorhergehenden Ansprüche, worin das Zeigermittel (16) derart wirkt, daß ein Cursor auf dem Anzeigefeld (SCRN) bewegbar ist, um den gewünschten Bereich anzuzeigen.

8. Gerät nach einem der vorhergehenden Ansprüche, welches so ausgelegt ist, daß ein Bildsymbol (MODE) zur Steuerung des Laufbildspeichers (9) auf dem Anzeigefeld (SCRN) angezeigt wird.

9. Gerät nach einem der vorhergehenden Ansprüche, worin die Bilddaten und Indexdaten in dem Indexspeicher (13) in Form einer Indextabelle (TBLm) gespeichert sind.

## Revendications

1. Appareil de recherche d'image, comprenant :
une mémoire d'image fixe (14) pour mémoriser des données d'image fixe ;
un moyen de commande de visualisation (22, 23) pour visualiser simultanément, dans une zone de visualisation (SCRN), une image fixe et d'autres informations ; et,
un moyen pointeur (16) pour indiquer une zone voulue dans ladite zone de visualisation (SCRN) ;
l'appareil étant caractérisé par :
un moyen sélecteur (11, 16) pour sélectionner une image fixe de format réduit d'une unité d'image d'un signal d'image mobile constitué par des données d'image sorties d'une mémoire d'image en mouvement (9) ;
une mémoire d'index (13) pour mémoriser lesdites données d'image correspondant à ladite image fixe sélectionnée par ledit moyen sélecteur (11, 16) et des données d'index correspondant à ladite image fixe ;
ledit moyen de commande de visualisation (22, 23) étant actif pour visualiser simultanément, dans ladite zone de visualisation (SCRN), une image mobile représentée par un signal vidéo d'image en mouvement provenant de ladite mémoire d'image en mouvement (9) et une image fixe représentée par un signal vidéo d'image fixe provenant de ladite mémoire d'image fixe (14) ; et,
un moyen de commande (11) pour lire lesdites données d'index correspondant à une image fixe indiquée par ledit moyen pointeur (16) dans ladite zone de visualisation (SCRN) et pour lire lesdites données d'image correspondant à ladite image fixe indiquée par ledit moyen pointeur (16).

2. Appareil selon la revendication 1, dans lequel le moyen de commande de visualisation (22, 23) est actif pour visualiser ladite image en mouvement dans une fenêtre principale (MAIN) de ladite zone de visualisation (SCRN) et pour visualiser ladite image fixe dans une fenêtre de sous-image de ladite zone de visualisation (SCRN).

3. Appareil selon la revendication 2, dans lequel ledit moyen de commande (11) a un mode d'enregistrement qui peut être sélectionné en indiquant un symbole graphique d'enregistrement (RGST) par ledit moyen pointeur (16), de telle sorte que, quand ledit symbole graphique d'enregistrement est indiqué par ledit moyen pointeur, l'image fixe de ladite unité d'image dudit signal d'image mobile visualisée dans ladite fenêtre principale (MAIN) au moment de l'indication par ledit moyen pointeur (16) et les données d'index correspondant à ladite image fixe sont mémorisées dans ladite mémoire d'index (13).

4. Appareil selon l'une quelconque des revendications 2 et 3, dans lequel ledit moyen de commande (11) a un mode de recherche qui peut être sélectionné en indiquant ladite image fixe dans ladite fenêtre de sous-image par ledit moyen pointeur (16), de telle sorte que, lorsque ladite fenêtre de sous-image est indiquée par ledit moyen pointeur (16), ledit moyen de commande (11) détecte ladite image fixe indiquée par ledit moyen pointeur et transmet les données d'index correspondant à ladite image fixe à ladite mémoire d'image en mouvement (9).

5. Appareil selon l'une quelconque des revendications 2 à 4, dans lequel ladite zone de visualisation (SCRN) comporte une pluralité desdites fenêtres de sous-images (SUB1-SUB6).

6. Appareil selon l'une quelconque des revendications 1 à 5, dans lequel ladite mémoire d'image en mouvement (9) est un support de mémoire à l'extérieur du et connectée au reste de l'appareil.

7. Dispositif selon l'une quelconque des revendications 1 à 6, dans lequel ledit moyen pointeur (16) est actif pour déplacer un curseur dans ladite zone de visualisation (SCRN) afin d'indiquer ladite zone voulue.

8. Appareil selon l'une quelconque des revendications 1 à 7, qui est actif pour visualiser dans ladite zone de visualisation (SCRN) un symbole graphique (MODE) afin de commander ladite mémoire d'image en mouvement (9).

9. Appareil selon l'une quelconque des revendications 1 à 8, dans lequel lesdites données d'image et lesdites données d'index sont mémorisées dans ladite mémoire d'index (13) dans une table d'index (TBLm).
